(19)

**Europäisches Patentamt**

**European Patent Office**

**Office européen des brevets**

(11)  **EP 2 908 662 B1**

(12)  # EUROPEAN PATENT SPECIFICATION

| | |
|---|---|
| (45) Date of publication and mention of the grant of the patent: **14.12.2016  Bulletin 2016/50** | (51) Int Cl.: ***A23L 5/10*** *(2016.01)*    ***A21D 13/00*** *(2006.01)* |
| (21) Application number: **13774442.1** | (86) International application number: **PCT/EP2013/071248** |
| (22) Date of filing: **11.10.2013** | (87) International publication number: **WO 2014/060301 (24.04.2014 Gazette 2014/17)** |

(54)  **FOOD SURFACE BROWNING FOR MW APPLICATIONS**

BRÄUNEN VON LEBENSMITTELOBERFLÄCHEN FÜR MW-ANWENDUNGEN

BRUNISSEMENT DE SURFACE D'ALIMENTS POUR APPLICATIONS À MICRO-ONDES

| | |
|---|---|
| (84) Designated Contracting States: **AL AT BE BG CH CY CZ DE DK EE ES FI FR GB GR HR HU IE IS IT LI LT LU LV MC MK MT NL NO PL PT RO RS SE SI SK SM TR** | • **SHAMAILA, Mawele** **78224 Singen (DE)** • **HALDEN, Jonas** **Aurora, Ohio 44202 (US)** |
| (30) Priority: **18.10.2012  US 201261715563 P** | (74) Representative: **Mollet, Beat Max** **Nestec S.A.** **CT-IAM** **Avenue Nestlé 55** **1800 Vevey (CH)** |
| (43) Date of publication of application: **26.08.2015  Bulletin 2015/35** | |
| (73) Proprietor: **Nestec S.A.** **1800 Vevey (CH)** | (56) References cited: **WO-A1-2005/002285    GB-A- 2 228 856** **US-A- 4 518 618    US-A1- 2002 031 578** |
| (72) Inventors: • **CAVIN, Sandrine** **CH-1066 Epalinges (CH)** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method for browning a surface of a food product when heated in a microwave oven. Further aspects of the invention are food products to be heated in the microwave oven as well as food products obtainable by the present method.

Speed baking with a microwave oven is more convenient than conventional oven baking, saving time and energy. It is faster, makes for easier cleaning, and saves money. Nevertheless, an adequate brown surface colour is an important criterion for baked food products. The development of browning in bakery is the result of the Maillard reaction and caramelization of sugars triggered by carbohydrates, proteins and water. However, surface browning of dough-based products during microwave heating is poor compared to conventional baking due to intrinsically different heating mechanisms. Microwave baking is associated with low surface temperature due to the cool ambient temperature inside the microwave oven and moisture migration from the product's inside to the product's surface, two phenomena strongly limiting browning development from the Maillard reaction. Hence, products cooked in a microwave oven are often pale and lack a brown cooked surface. The colour of a food product, however, is an important criterion for consumers when it comes to judging quality, preference and attractiveness of for example a baked food product. As a consequence, there is a demand in the industry to find solutions to address this problem and to find ways to induce surface browning of food products when cooked in a microwave oven.

One way to overcome this problem is to place the dough-based food product in a susceptor in order to achieve a higher surface temperature which may result in an improved browning of the food surface. Microwave susceptors are typically aluminium metalized Polyester (PET) sheets, where the aluminium is deposited as a thin surface layer, absorbing part of the microwave energy and thereby generating a higher food surface temperature.

Further ways to overcome this problem are proposed in the art as exemplified here below.

EP0203725B1 discloses a food browning composition which comprises collagen or gelatine hydrolysed to its constituent amino acids, one or more reducing sugars and one or more alkalis to lower the pH to between 7 and 10. The disadvantage of this solution is that an industrial application is relatively elaborate as the hydrolysis has to be controlled and complete. Furthermore, certain consumers may not want to have ingredients which are from an animal source on e.g. bakery products.

US 4,518,618 discloses a food coating composition comprising coating ingredients such as flour, starches, spices, herbs and at least one additional salt ingredient selected e.g. from potassium acetate, chloride, bicarbonate or sodium bicarbonate. The coating is applied in powdered form and results in crispy, golden brown and flavourful food coatings. The disadvantage of this solution is that the food surface is not just modified in its colour, but that the food product has thereafter a perceivable surface coating adding to the perception of crispiness and flavour, including the taste of salt. Although this may be very favourable for application to certain foods such as meat and poultry products, it may be less desired for application for example for bakery products.

US 2002/0031578A1 discloses a sprayable browning composition comprising an oil-in-water emulsion further comprising a browning agent dissolved in the water phase. The browning agents generally contain a mixture of carbohydrates which may have been treated by heating, pyrolysation or burning. The disadvantage of this solution is that the disclosed browning composition may have an impact on the flavour of a treated food product. Furthermore, consumers may perceive the use of those browning agents known in the art as "non natural" and may not like them.

US 4,917,907 discloses a method of browning an uncooked bottom crust dough of a pie by supporting the pie on a tray of a microwave-interactive material, interposing between the pie and the tray a release coating which may be a fat or an oil, forming the bottom crust of the pie by the addition of reducing sugars and amino acids, and heating the pie in a microwave oven. The disadvantage of the disclosed solution is that it is basically only applicable to a bottom crust of a pie as the dough part making the crust has to be specifically enriched in sugars and amino acids, the product has to be prepared in a tray and the browning reaction will be quasi uniform wherever the bottom crust is in contact with the microwave-interactive tray.

WO 2005/002285 A1 discloses a microwave dry-fry cooking process and a microwavable food product which includes a food load and a coating composition coated on the food load, where the coating composition comprises at least one microwave-absorbing oil or fat.

GB 2228856 A discloses a process where a serve product that readily browns upon heating with microwave energy, browning is achieved by the combination of treating at least one surface of the product with an aqueous solution of an edible alkali hydroxide.

US 4,968,522 discloses a browning agent for foodstuffs which contains a water-in-oil emulsion, a surfactant and an edible base in the aqueous phase of the emulsion. The browning agent may be coated onto carbonyl-containing food stuffs such as biscuits, pizza, pie coverings or hash brown potatoes, and thereafter being micro-waved to enduce a browning reaction. A disadvantage of this solution may be that the entire coated food surface will be uniformly browned after the microwave treatment.

However, none of the above technologies describe a method for browning only a part of a food surface in a micro-wave oven, as e.g. to make grill marks, by applying at the same time a natural as well as colourless agent to the surface prior to the micro-wave treatment.

There is still a clear need in the industry to find alternatives and/or improved solutions to the known methods of food surface browning for applications in microwave ovens.

The object of the present invention is to improve the state of the art and to provide an improved and/or alternative method for browning a food product surface when heated in a microwave oven and to overcome at least some of the inconveniences described above.

The object of the present invention is achieved by the subject matter of the independent claims. The dependent claims further develop the idea of the present invention.

Accordingly, the present invention provides in a first aspect a method for browning a surface of a food product when heated in a microwave oven comprising the steps of

> i) Coating the surface with a composition comprising an edible oil;
> ii) Overlaying the coating of step i) with a second coating comprising an edible chemical base; and
> iii) Heating the food product in a microwave oven with the use of a susceptor for a time period sufficient to brown the surface of said food product.

In a second aspect, the invention relates to a food product to be heated in a microwave oven, wherein a surface of said food product is coated in a first layer with a composition comprising an edible oil and in a second layer with a composition comprising an edible chemical base.

In a still further aspect, the invention relates to a food product obtainable by the method of the invention.

It has been surprisingly found by the inventors, that when first coating a surface of a food product as for example a bakery product with an edible oil, and thereafter overlaying this first surface coating with a second coating comprising an edible chemical base, such as baking soda, a nice brown surface colour develops on the product when heated in a microwave oven and when making use of a susceptor.

A particular advantage of the invention is that there is no visible browning reaction of a treated food product surface before heating in a microwave oven. For example, it was observed that a product coated by the method of the invention was shelf-stable for more than 6 months at -20°C and that no visible colour reaction occurred during that storage period at the product surface. Upon heating the product thereafter in a micro-wave oven, a nice brown colour developed at the treated food surface. It is expected that the product and treated surface will be stable for more than 10 months under the above mentioned conditions.

A further advantage of the present invention is that authentic looking grill marks can be generated on a food surface, as for example on a toast bread or Panini bread. Thereby, the total food surface is coated with an edible oil, and thereafter the second coating comprising the edible chemical base is applied onto that surface in stripes. Upon heating in a micro-wave oven, those stripes develop into nice, darker brown stripes looking like grill marks. Advantageously, the entire food surface has a homogenous baked aspect as also those parts of the surface which are not covered by the second coating develop a lighter brown nice surface appearance, but contrasting clearly to the darker brown 'grill marks'. It was observed in the product trials that the applied grill marks, i.e. the second coating, remain invisible during the at least 6 months of the storage period of the food products and that thereafter upon heating in a microwave oven the colour of the 'grill marks' develop to their full intensity as observed with products which have been stored for only one day. Hence, the active components of this surface colouring did not dilute or penetrate into the food product even after at least 6 months of storage at -20°C. Further details on these product trials are provided in the Example section.

## Brief Description of the Drawings

> Figure 1: Panini bread coated with soybean oil and sodium bicarbonate in stripes as a second coating before and after heating in a microwave oven.

> Figure 2: Panini bread coated with rapeseed oil, sodium bicarbonate and a combination thereof after heating in a microwave oven.

> Figure 3: Panini bread coated with soybean oil and sodium bicarbonate after heating in a microwave oven.

**Detailed Description of the invention**

The present invention pertains to a method for browning a surface of a food product when heated in a microwave oven comprising the steps of

i) Coating the surface with a composition comprising an edible oil;
ii) Overlaying the coating of step i) with a second coating comprising an edible chemical base; and
iii) Heating the food product in a microwave oven with the use of a susceptor for a time period sufficient to brown the surface of said food product,

wherein the edible oil is selected from the group consisting of soybean oil, olive oil, rapeseed oil, sunflower oil, peanut oil, nut oil and walnut oil. Advantageously, those selected edible oils are used because they work particularly well for the invention. Furthermore, they are healthy and well accepted by consumers for a use in the preparation of a variety of different food products.

In order to achieve good results with the surface coating, the first coating of the surface with the edible oil comprises from 3 to 50 mg/cm$^2$, preferably from 5 to 35 mg/cm$^2$, even more preferably from 10 to 20 mg/cm$^2$ of the edible oil.

In a preferred embodiment of the invention, the edible chemical base comprised in a second coating, is selected from the group consisting of sodium bicarbonate, sodium hydroxide, potassium hydroxide, magnesium hydroxide and calcium carbonate, or a combination thereof. Particularly, the use of baking soda, i.e. sodium bicarbonate, is a preferred chemical base to be used in the present invention. It works particularly well, is absolute food safe and easy to handle.

In order to achieve good results with the surface browning, the second coating of the surface comprises from 1 to 50 mg/cm$^2$, preferably from 5 to 30 mg/cm$^2$, even more preferably from 7 to 15 mg/cm$^2$ of the chemical base.

In a further embodiment, the second coating of the method of the invention further comprises a reducing sugar. The inventors have surprisingly found that when a reducing sugar is present together with the edible chemical base in the second coating, the browning reaction upon a microwave heating will be much more intense and faster. Hence, his allows to either reducing the amount of the chemical base to be used in the second coating and still to achieve a same intense browning reaction upon the heating step, or to reduce the time and/or energy to be used for the microwave heating. This would allow a faster industrial manufacturing process and/or to reduce the energy costs of the microwave heating.

The reducing sugar for use in the method of the invention may be selected from the group consisting of dextrose, maltose, fructose, sucrose and lactose, or a combination thereof.

The method of the invention pertains to the use of a susceptor, wherein the susceptor is preferably made of a metal foil sheet or a metalized film, such as e.g. a metalized polyester film or a metalized paper board.

A "susceptor" is a material used for its ability to absorb electromagnetic energy and convert it to heat. This energy is typically radiofrequency or microwave radiation used in industrial heating processes, but also in microwave cooking as used for example at homes.

Preferably, the metal used in the foil sheet or for metalizing the film or paper board is aluminium.

The present invention pertains to a method, wherein the food product is heated in a microwave oven preferably from 250 to 1500 Watts, more preferably from 800 to 1300 Watts, and this preferably from 1 to 8 min, more preferably from 2 to 5 min. These conditions allow the method of the invention to sufficiently brown the surface of a coated food product and to result into a lighter or darker brown surface colour according to the specific requirements of the application and the food product in question.

Another aspect of the invention is a food product to be heated in a microwave oven, wherein a surface of said food product is coated in a first layer with a composition comprising an edible oil and in a second layer with a composition comprising an edible chemical base.

A still further aspect of the invention is a food product obtainable by the method of the invention, i.e. wherein a surface of said food product is coated in a first layer with a composition comprising an edible oil and in a second layer with a composition comprising an edible chemical base, and where the said food product is heated in a microwave oven with the use of a susceptor for a time period sufficient to brown the surface of said food product.

In a preferred embodiment, the food product of the invention either before or after the heating step in the microwave oven is frozen. Preferably, the product is frozen at least at -10°C or at least at -18°C.

The food products of the invention are preferably selected from the group consisting of Panini bread, Hot Pocket food product, pizzas, breads or dough's , spring rolls, cereal products or cookies.

The food products of the invention pertain also to pasta, cheese, meat, chicken, vegetable or potato dishes.

Those skilled in the art will understand that they can freely combine all features of the present invention disclosed herein. In particular, features described for the method of the present invention may be combined with the products of the present invention and vice versa. Further, features described for different embodiments of the present invention may be combined.

Further advantages and features of the present invention are apparent from the figures and examples.

**Example 1:**

On frozen Panini bread (Lean Cuisine, USA) at a temperature of around -10°C, about 1 g of soybean oil was sprayed using a painter spray gun. Then, similarly about 0.8 g of sodium bicarbonate 1M was sprayed through a mould in Plexiglas specially designed for these experiments. Sodium bicarbonate was also sprayed using a painter spray gun but with smaller nozzles. Next, Panini bread slices were stored in the blast freezer for 30 minutes before going through the packaging line. The packaging line includes: the insertion of the original susceptors, the packaging in thin plastic film heat sealed and finally the placement in their original boxes.

These Panini breads are stored at -18°C to proceed to shelf-life storage tests.

Detailed color analysis of the frozen Panini breads as well as after microwaving for 2min45sec at 1100 Watts over a flat susceptor, were carried out using the CIELab* notation. In the International Commission on Illumination (CIE), a color is represented by a point in a color space. The coordinates of such a point are: the luminosity $L$ (L=0: black, L=100: white), $a*$ the amount of red and green (a* positive: red, a* negative: green), and $b*$ the amount of yellow and blue (b* positive: yellow, b* negative: blue). Visual color changes were evaluated by calculating the Euclidean distance between the two points which described the color before and after testing. The distance is represented by the equation:

$$DEab* = \sqrt{(L_2^* - L_1^*)^2 + (a_2^* - a_1^*)^2 + (b_2^* - b_1^*)^2}$$

The Color analysis was registered using a computer controlled digital camera system (DigiEye, Verivide) with a D65 light source.

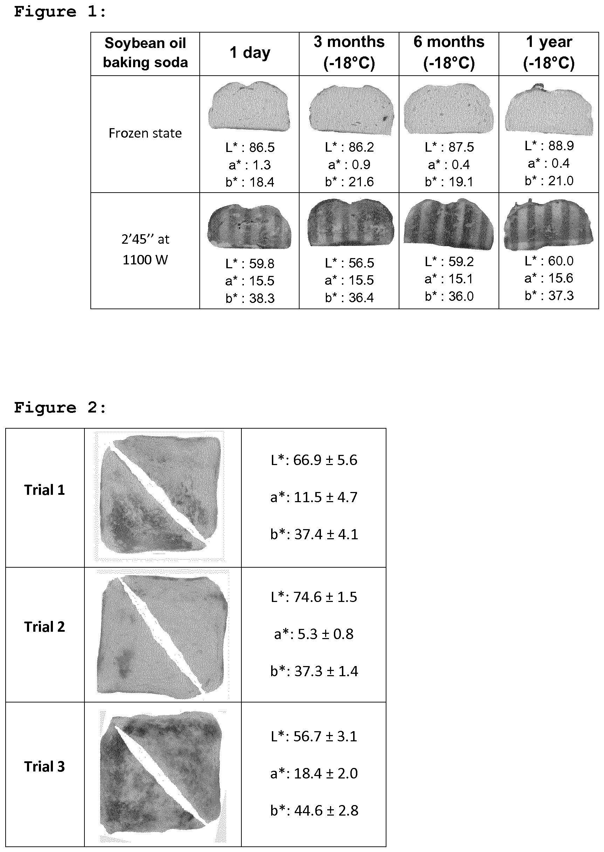

The results are depicted in Figure 1 and show that there are no grill marks visible during the storage at -18°C and very nice grill marks generated during the baking process which look similar for all samples over the tested shelf-life period.

**Example 2:**

The synergistic effect of applying one layer of rapeseed oil, one layer of sodium bicarbonate (Fluka, Switzerland) and to heat the Panini bread (from Coop, Switzerland) (2 x 50 cm$^2$) in a microwave oven for 1min40sec at 750 Watts with the use of a susceptor is shown by three trials according to Table 1.

Table 1:

|  | Oil | Sodium bicarbonate | Panini bread |
|---|---|---|---|
| Trial 1 | - | 0.5 g | 1'40" 750 W |
| Trial 2 | 1.0g | - | 1'40" 750 W |
| Trial 3 | 1.0g | 0.6g | 1'40" 750 W |

The Color development was measured using a computer controlled digital camera system (DigiEye, Verivide) with a D65 light source.

The results are depicted in Figure 2 and show a more intense and appetizing browning effect of the surface coating containing both, the oil and the sodium bicarbonate, in trial 3, as compared to the surface coating of just containing either the oil or the sodium bicarbonate alone.

**Example 3:**

Identical frozen Panini bread products (from Lean Cuisine, USA) were treated in the following way:

i) control group: no treatment of the frozen breads;

ii) 1.0 g of soybean oil was sprayed onto a whole bread surface of about 80 cm$^2$; thereafter 0.5 g of a 1M solution sodium bicarbonate was applied thereon in stripes;

iii) 1.0 g of an emulsion containing 92% of soybean oil, 7.5% of water and 0.5% of onion extract was sprayed onto the whole bread surface of about 80 cm$^2$; thereafter 0.5 g of a 1M sodium bicarbonate solution was sprayed thereupon in the form of stripes;

iv) 1.0 g of soybean oil was sprayed onto a whole Panini bread surface of about 80 cm$^2$; thereafter 0.5 g of a solution of sodium bicarbonate 1M/sucrose 0.1M in applied thereupon in the form of stripes.

The treated breads of the four groups were then heated in a microwave oven with the use of a susceptor under identical conditions for 2 min 45 seconds at 1100 Watts.

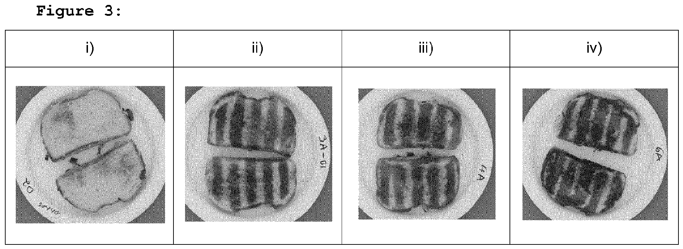

The results are shown in Figure 3. The breads of the group ii) to iv) developed nice grill mark like stripes on their surfaces upon the microwave heat treatment. Thereby, the resulting colour is even more enhanced in group iv), where sucrose has been applied in addition to the sodium bicarbonate solution.

**Claims**

1. A method for browning a surface of a food product when heated in a microwave oven comprising the steps of

> i) Coating the surface with a composition comprising an edible oil;
> ii) Overlaying the coating of step i) with a second coating comprising an edible chemical base; and
> iii) Heating the food product in a microwave oven with the use of a susceptor for a time period sufficient to brown the surface of said food product.

2. The method of claim 1, wherein the edible oil is selected from the group consisting of soybean oil, olive oil, rapeseed oil, sunflower oil, peanut oil, nut oil and walnut oil.

3. The method of claim 1 or 2, wherein the coating of the surface comprises from 3 to 50 mg/cm$^2$ of the edible oil.

4. The method of one of claims 1 to 3, wherein the edible chemical base is selected from the group consisting of sodium bicarbonate, sodium hydroxide, potassium hydroxide, magnesium hydroxide and calcium carbonate, or a combination thereof.

5. The method of one of claims 1 to 4, wherein the coating of the surface comprises from 1 to 50 mg/cm$^2$ of the chemical base.

6. The method of one of claims 1 to 5, wherein the second coating further comprises a reducing sugar.

7. The method of claim 6, wherein the reducing sugar is selected from the group consisting of dextrose, maltose, fructose, sucrose and lactose, or a combination thereof.

8. The method of one of claims 1 to 7, wherein the susceptor is made of a metal foil sheet or a metalized film, such as e.g. a metalized polyester film or a metalized paper board.

9. The method of claim 8, wherein the metal is aluminium.

10. The method of one of claims 1 to 9, wherein the food product is heated in a microwave oven from 250 to 1500 Watts, preferably from 800 to 1300 Watts and from 1 to 8 min, preferably from 2 to 5 min.

11. A food product to be heated in a microwave oven, wherein a surface of said food product is coated in a first layer with a composition comprising an edible oil and in a second layer with a composition comprising an edible chemical base.

12. A food product obtainable by the method according to one of the claims 1 to 10.

13. The food product of claim 11 or 12, where the food product is frozen.

14. The food product of one of the claims 11 to 13, where the food product is a Panini bread, a Hot Pocket food product, a pizza, a bread, a cereal product or a cookie.

15. The food product of one of the claims 11 to 13, where the food product is a pasta, cheese, meat, chicken, vegetable or potato dish.

**Patentansprüche**

1. Verfahren zum Bräunen einer Oberfläche eines Lebensmittelproduktes wenn es in einem Mikrowellenherd erwärmt wird, umfassend die folgenden Schritte:

    i) Beschichten der Oberfläche mit einer Zusammensetzung, die ein essbares Öl umfasst;
    ii) Überlagern der Beschichtung von Schritt i) mit einer zweiten Beschichtung, die eine essbare chemische Base umfasst; und
    iii) Erwärmen des Lebensmittelproduktes in einem Mikrowellenherd unter Verwendung eines Suszeptors für einen Zeitraum, der ausreicht, um die Oberfläche des Lebensmittelproduktes zu bräunen.

2. Verfahren nach Anspruch 1, wobei das essbare Öl ausgewählt ist aus der Gruppe bestehend aus Sojaöl, Olivenöl, Rapsöl, Sonnenblumenöl, Erdnussöl, Nussöl und Walnussöl.

3. Verfahren nach Anspruch 1 oder 2, wobei die Beschichtung der Oberfläche 3 bis 50 mg/cm$^2$ des essbaren Öls umfasst.

4. Verfahren nach einem der Ansprüche 1 bis 3, wobei die essbare Chemiebase ausgewählt ist aus der Gruppe bestehend aus Natriumbicarbonat, Natriumhydroxid, Kaliumhydroxid, Magnesiumhydroxid und Calciumcarbonat oder einer Kombination davon.

5. Verfahren nach Anspruch 1 oder 4, wobei die Beschichtung der Oberfläche 1 bis 50 mg/cm$^2$ der chemischen Base umfasst.

6. Verfahren nach einem der Ansprüche 1 bis 5, wobei die zweite Beschichtung ferner einen reduzierenden Zucker umfasst.

7. Verfahren nach Anspruch 6, wobei der reduzierende Zucker ausgewählt ist aus der Gruppe bestehend aus Dextrose, Maltose, Fructose, Sucrose und Lactose, oder einer Kombination davon.

8. Verfahren nach einem der Ansprüche 1 bis 7, wobei der Suszeptor aus einer Metallfolienlage oder einem metallisierten Film hergestellt ist, wie zum Beispiel einer metallisierten Polyesterfolie oder einem metallisierten Pappkarton.

9. Verfahren nach Anspruch 8, wobei das Metall Aluminium ist.

10. Verfahren nach einem der Ansprüche 1 bis 9, wobei das Lebensmittelprodukt in einem Mikrowellenherd von 250 bis 1500 Watt erwärmt wird, vorzugsweise von 800 bis 1300 Watt, und von 1 bis 8 Minuten lang, vorzugsweise von 2 bis 5 Minuten lang.

11. Lebensmittelprodukt, das in einem Mikrowellenherd erwärmt werden soll, wobei eine Oberfläche des Lebensmittelproduktes in einer ersten Schicht mit einer Zusammensetzung, die ein essbares Öl umfasst, und in einer zweiten Schicht mit einer Zusammensetzung, die eine essbare chemische Base umfasst, beschichtet ist.

12. Nahrungsmittelprodukt, das durch das Verfahren nach einem der Ansprüche 1 bis 10 erhältlich ist.

13. Nahrungsmittelprodukt nach Anspruch 11 oder 12, wobei das Produkt gefroren ist.

14. Nahrungsmittelprodukt nach einem der Ansprüche 11 bis 13, wobei das Nahrungsmittelprodukt ein Panini-Brot, ein Hot-Pocket-Lebensmittelprodukt, eine Pizza, ein Brot, ein Getreideprodukt oder ein Keks ist.

15. Lebensmittelprodukt nach einem der Ansprüche 11 bis 13, wobei das Lebensmittelprodukt ein Nudel-, Käse-, Fleisch-, Hähnchen-, Gemüse- oder Kartoffelgericht ist.

**Revendications**

1. Procédé de brunissement d'une surface d'un produit alimentaire lorsqu'il est chauffé dans un four à micro-onde, comprenant les étapes consistant à

i) enrober la surface avec une composition comprenant une huile comestible ;

ii) recouvrir l'enrobage de l'étape i) avec un second enrobage comprenant une base chimique comestible ; et

iii) faire chauffer le produit alimentaire dans un four à micro-ondes en utilisant un suscepteur pendant une période suffisante pour brunir la surface dudit produit alimentaire.

2. Procédé selon la revendication 1, dans lequel l'huile comestible est choisie dans le groupe constitué d'huile de soja, huile d'olive, huile de colza, huile de tournesol, huile d'arachide, huile de noix et huile de noisette.

3. Procédé selon la revendication 1 ou 2, dans lequel l'enrobage de la surface comprend de 3 à 50 mg/cm$^2$ de l'huile comestible.

4. Procédé selon l'une des revendications 1 à 3, dans lequel la base chimique comestible est choisie dans le groupe constitué de bicarbonate de sodium, hydroxyde de sodium, hydroxyde de potassium, hydroxyde de magnésium et carbonate de calcium ou une combinaison de ceux-ci.

5. Procédé selon l'une des revendications 1 à 4, dans lequel l'enrobage de la surface comprend de 1 à 50 mg/cm$^2$ de la base chimique.

6. Procédé selon l'une des revendications 1 à 5, dans laquelle le second enrobage comprend en outre un sucre réducteur.

7. Procédé selon la revendication 6, dans lequel le sucre réducteur est choisi dans le groupe constitué de dextrose, maltose, fructose, saccharose et lactose ou une combinaison de ceux-ci.

8. Procédé selon l'une des revendications 1 à 7, dans lequel le suscepteur est composé d'une feuille de film métallique ou un film métallisé, tel que par ex. un film de polyester métallisé ou un carton de papier métallisé.

9. Procédé selon la revendication 8, dans lequel le métal est l'aluminium.

10. Procédé selon l'une des revendications 1 à 9, dans lequel le produit alimentaire est chauffé dans un four à micro-ondes de 250 à 1500 watts, de préférence de 800 à 1300 watts et pendant 1 à 8 minutes, de préférence de 2 à 5 minutes.

11. Produit alimentaire à chauffer dans un four à micro-ondes, dans lequel une surface dudit produit alimentaire est enrobé dans une première couche avec une composition comprenant une huile comestible et dans une seconde couche avec une composition comprenant une base chimique comestible.

12. Produit alimentaire, pouvant être obtenu par le procédé selon l'une des revendications 1 à 10.

13. Produit alimentaire selon la revendication 11 ou 12, dans lequel le produit alimentaire est congelé.

14. Produit alimentaire selon l'une des revendications 11 à 13, dans lequel le produit alimentaire est un pain pour panini, un produit alimentaire dans un sachet chaud, une pizza, un pain, un produit de céréales ou un biscuit sucré.

15. Produit alimentaire selon l'une des revendications 11 à 13, dans lequel le produit alimentaire est un plat à base de pâtes, fromage, viande, poulet, légumes ou pommes de terre.

Figure 1:

| Soybean oil baking soda | 1 day | 3 months (-18°C) | 6 months (-18°C) | 1 year (-18°C) |
|---|---|---|---|---|
| Frozen state | L* : 86.5<br>a* : 1.3<br>b* : 18.4 | L* : 86.2<br>a* : 0.9<br>b* : 21.6 | L* : 87.5<br>a* : 0.4<br>b* : 19.1 | L* : 88.9<br>a* : 0.4<br>b* : 21.0 |
| 2'45'' at 1100 W | L* : 59.8<br>a* : 15.5<br>b* : 38.3 | L* : 56.5<br>a* : 15.5<br>b* : 36.4 | L* : 59.2<br>a* : 15.1<br>b* : 36.0 | L* : 60.0<br>a* : 15.6<br>b* : 37.3 |

Figure 2:

| Trial 1 | | L*: 66.9 ± 5.6<br><br>a*: 11.5 ± 4.7<br><br>b*: 37.4 ± 4.1 |
|---|---|---|
| Trial 2 | | L*: 74.6 ± 1.5<br><br>a*: 5.3 ± 0.8<br><br>b*: 37.3 ± 1.4 |
| Trial 3 | | L*: 56.7 ± 3.1<br><br>a*: 18.4 ± 2.0<br><br>b*: 44.6 ± 2.8 |

**Figure 3:**

| i) | ii) | iii) | iv) |
|----|-----|------|-----|
| | | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0203725 B1
- US 4518618 A
- US 20020031578 A1
- US 4917907 A
- WO 2005002285 A1
- GB 2228856 A
- US 4968522 A